(19) Europäisches Patentamt
European Patent Office
Office européen des brevets

(11) **EP 2 584 193 A1**

(12) **EUROPEAN PATENT APPLICATION**

(43) Date of publication:
**24.04.2013 Bulletin 2013/17**

(51) Int Cl.:
***F03D 7/02*** (2006.01)

(21) Application number: **11185982.3**

(22) Date of filing: **20.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft 80333 München (DE)**

(72) Inventors:
• **Esbensen, Thomas 7400 Herning (DK)**
• **Hoegh, Gustav 7400 Herning (DK)**

(54) **Wind turbine with air density correction of pitch angle**

(57) A method of controlling the pitch angle of a wind turbine (10) and a wind turbine (10) employing said method are provided. The wind turbine (10) includes a rotor (11) having at least one rotor blade (12). A pitch angle of the at least one rotor blade (12) can be variably set. The method comprises a step of setting the pitch angle of the at least one rotor blade (12) as a function of the determined air density.

FIG 1

**Description**

Technical Field

The invention relates to a method of controlling the pitch angle of a wind turbine and a wind turbine employing the same.

Technical Background

Maximizing efficiency of a wind turbine is an important aspect in controlling wind turbines because the energy gained by an improved efficiency has a direct impact on the cost of energy and thus on the profitability of the installation. The power P captured by a wind turbine depends, inter alia, on the air density which is itself dependent on the current climatic conditions such as atmospheric pressure and temperature. Since air density has an influence on the efficiency of the wind turbine it has been proposed in US 2,023,105 B2 to determine an exciter power fed to the generator based on air density data.

Summary of the Invention

It is an objective of the present invention to provide a wind turbine and a method of controlling a wind turbine which are advantageous in view of wind turbine efficiency.
This objective is solved by a method of controlling a wind turbine as claimed in claim 1 and by a wind turbine as claimed in claim 13. The depending claims contain further developments of the invention.
Thus, a first aspect of the invention provides a method of controlling a wind turbine including a rotor having at least one rotor blade, wherein a pitch angle of the at least one rotor blade can be variably set. The method comprises setting the pitch angle of the at least one rotor blade as a function of the air density. The air density used in the inventive method can be either of the following:

- measured air density
- air density derived based on measurements, e.g. on measurements of temperature, pressure, humidity.
- approximated, measured air density, e.g. using only temperature or pressure and assume some average temperature and pressure,
- air density derived based on statistics, e.g. the mean air density at the installation, season average values, etc., or
- combinations thereof.

The invention is based on the understanding that air density has an effect on the optimal pitch angle, i.e. that the pitch angle that provides a maximum power output for a given wind-speed varies with air density. The method of the invention takes advantage of this insight by taking into account the air density at the site of the wind turbine and setting the rotor blades pitch angle as a function of the air density. It can be shown that setting the pitch angle based on air density data increases the power output of a wind turbine by up to more than one percent in certain conditions which represents an important effect on the wind turbine profitability. On the other hand, if the pitch reference is not compensated by air density the efficiency will decrease, whereas loads and acoustic noise will typically increase.
According to a special embodiment of the invention, setting of the pitch angle may comprise the steps of:

- determining a pitch angle reference for the at least one rotor blade based on the generator power or torque, a rotational speed, or data representing the wind speed;
- determining a pitch angle correction as a function of the air density; and
- correcting the determined pitch angle reference by the determined pitch angle correction.

Correcting the pitch angle reference by the pitch angle correction allows for easily retrofitting existing pitch controllers with the inventive method. As the rotational speed, one could either use the speed of the rotor, the generator rotor shaft, or any other rotational speed of the wind turbine related to the rotating rotor. Using the speed of the generator (rotor) shaft is particularly advantageous since the quality of this sensor is typically better than if measuring the rotor speed (main shaft speed), since one can gain from the gear ratio upscaling the speed at the generator if the wind turbine is not a direct drive turbine. As the data representing wind speed, one could either use the measured wind speed or an estimated wind speed.
The air density can either be taken from geographic information about the site of the wind turbine (e.g. altitude above sea level in the simplest case) or be determined in a preceding step of determining the air density at the site of the wind turbine. Combining measured data with data taken from geographic information for determining an actual value of the air density is also possible.

Determining the air density may include determining a mean air density. While air density may vary for a given site, variations in air density among different sites generally have a greater impact on the wind turbine efficiency. Thus, a cost-effective implementation of the present invention can be limited to determining the mean air density for the site of the wind turbine e.g. from corresponding statistics.

Setting the pitch angle of the at least one rotor blade as a function of the air density can include selecting the pitch angle from a set of predefined pitch angles, or pitch angle corrections by which the pitch angle reference is corrected, in accordance with the air density. Embodiments of the invention can include look-up tables and use the air density as an index to the table. An interpolation function can be carried out in order to calculate an appropriate pitch angle, or an appropriate pitch angle correction, for an air density for which no predefined pitch angle can be found in the table. According to another embodiment the pitch angle or the pitch angle correction may be calculated as a function of the air density according to a given equation.

Determining the air density can include determining an altitude above sea-level of the wind turbine. Air density generally decreases with increasing altitude. Accordingly, air density can be determined by means of estimation referring to the altitude above sea-level of the wind turbine. Since the altitude usually remains constant during the life-time of the wind turbine, this is a very simple and thus economic implementation of the control method of the invention.

Furthermore, determining the air density can include determining or measuring an air pressure. Air density is closely related to the atmospheric pressure. Thus, a good representation of the air density can be derived by determining or measuring atmospheric pressure.

Additionally or alternatively determining the air density may include measuring an environmental temperature and/or an environmental humidity. Air density and humidity also largely varies with temperature, thus, a good representation of the air density can be derived by measuring the environmental temperature and/or the environmental humidity. In advantageous embodiments of the invention a combination of at least two of the atmospheric pressure, the environmental temperature and the environmental humidity are measured in order to yield a precise figure of the air density.

The method may further comprise measuring or determining a current operational parameter of the wind turbine and setting a torque of the electric generator or converter or a power of the electric generator or converter as a function of the measured or determined current operational parameter of the wind turbine. This allows for increasing or decreasing the electric power output from the electric generator or converter according to circumstances and thus for outputting a maximum power possible at any time.

The current operational parameter of the wind turbine may, in particular, be a current wind speed or a current rotational speed or a current rotor tip-speed ratio. In many wind turbines the power of the electric generator, i.e. the electric power provided by the electric generator of the wind turbine, is set as a function of the rotor's rotational speed. The power can be set by choosing a corresponding torque of the electric generator, which in turn can be set by suitably choosing the power of the generator, e.g. the exciting power fed to the generator. Hence, the power and the torque of the electric generator are interrelated.

Usually, the torque will be set to a greater value when the rotor speed increases and to a lower value when the rotor speed decreases. For example, if referring to operation according to a speed-power curve, a power or torque value is looked-up based on the speed: a greater value for a greater speed. In another control region (in the constant-speed region) the power or torque may be controlled based on the speed error, i.e. whether the speed is too high or too low compared to a speed setpoint.

Setting the torque or the power of the electric generator can be done independently of the determined air density. Hence, the invention provides for a simple control algorithm that takes the air density into account without altering the power of the generator, e.g. the exciting power of the generator, and where controlling the torque or power of the electric generator is done independently from setting the pitch angle. Controlling the torque or power on the one hand and the pitch angle on the other can be implemented using two independent control loops.

A second aspect of the invention provides a wind turbine including a rotor having at least one rotor blade with a pitch actuator system and an electric generator connected to the rotor, wherein a pitch angle of the at least one rotor blade can be variably set by the pitch actuator system. According to the invention the wind turbine further comprises a controller connected to the pitch actuator system which is adapted to carry out the method of the first aspect of the invention.

A third aspect of the invention provides a software program product comprising computer program code stored on a computer readable storage medium which, when executed on a controller of a wind turbine, instructs the wind turbine to carry out the method of the first aspect of the invention.

Further features, properties and advantages of the present invention will become clear from the following description of embodiments in conjunction with the accompanying drawings.

Fig. 1 schematically shows some of the main components of a wind turbine according to the invention.

Figs. 2 to 4 illustrate the influence of air density on various parameters of a wind turbine in three sub-diagrams.

Fig. 5 shows a diagram illustrating the dependence of the optimal pitch angle on air density.

Fig. 6 shows a diagram illustrating the increased power output provided by the invention.

Detailed description of embodiments

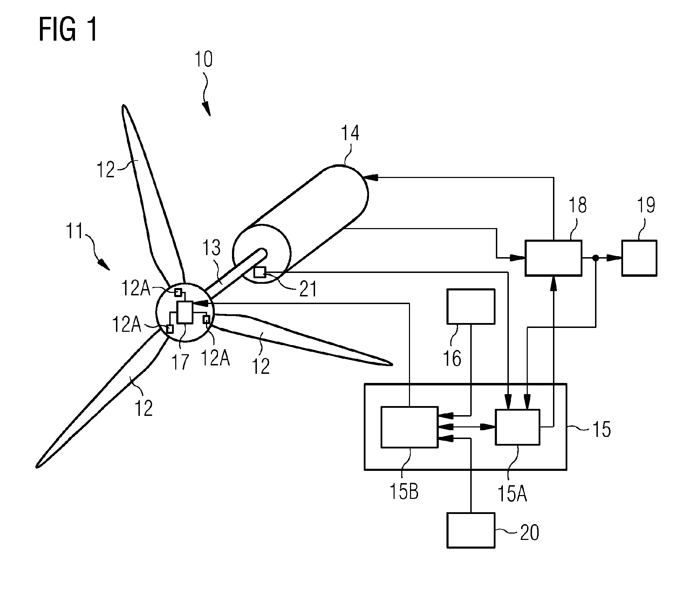

Fig. 1 schematically shows a wind turbine 10 according to the invention. Please note that only those components of the wind turbine 10 are shown which are necessary to explain the invention. The wind turbine 10 includes a rotor 11 which in this exemplary embodiment has three rotor blades 12. As is common knowledge in the art, any number of blades 12 can be used within the scope of the invention, however, for various reasons three rotor blades are generally accepted as being an optimal choice. The rotor 11 is connected to an electric generator 14 by means of a rotor shaft 13 which transmits the rotational power provided by the rotor 11 to the electric generator 14 which transforms the mechanical power into electric power. In some embodiments of the invention a transmission including gears may be used to transmit torque from the rotor 11 to the electric generator 14, however, such a transmission system entails extra costs and weight. Hence, it may be advantageous to avoid such a transmission system.

In the wind turbine 10 shown in Figure 1, each of the rotor blades 12 is equipped with a pitch actuator 12A, e.g. an electric motor or a hydraulic piston, which is part of a pitch actuator system 17. By use of the pitch actuators 12A the pitch actuator system 17 can set the pitch angles of the rotor blades 12 based on a pitch reference received from a pitch controller 15B.

The wind turbine 10 of the invention further includes a control system 15 that can be implemented in form of one or more microcontrollers or in form of software running on a computer. The control system 15 comprises a power controller 15A for controlling the output power of the wind turbine and a pitch controller 15B for providing the pitch reference to the pitch actuator system 17.

The power controller 15A is connected to a power converter 18 of the wind turbine and outputs a power reference to this converter based on e.g. a power demand input from an operator, power information measured at the grid side of the power converter 18, and a rotor speed signal (e.g. describing the number of rotations per minute the rotor is performing or the like). The rotor speed signal may be measured, e.g., by a shaft speed sensor 21. The power converter 18 uses the power reference to influence various operational parameters of the electric generator 14 such as active and reactive power, the torque applied by the electric generator 14, etc., in order to control power generation of the wind turbine and to fit the output power of the generator 14 to the needs of the grid 19 to which the generator 14 is coupled.

The pitch controller 15B is connected to the pitch actuator system of the rotor blades 12 and outputs a pitch reference to the pitch actuator system 17. In the present embodiment, the pitch controller 15B is also connected to the power controller 15A to receive the power reference and establishes the pitch reference based on the power reference. In the present invention, the pitch reference that is output by the pitch controller 15B is a corrected pitch reference as will be described below.

The pitch controller 15B is connected to an air density data source 16 which provides air density data to the pitch controller 15B. The air density data is used by the pitch controller 15B to correct the pitch reference as a function of the air density data such that the output of electric power generated by the electric generator 14 is optimized for a given wind-speed.

The power P captured by a wind turbine can be expressed according to the following equation:

$$P = 0.5 \cdot \rho \cdot A \cdot C_p \cdot v^3$$

where p is the air density, A is the rotor swept area, $C_p$ is the wind turbine's power coefficient and v is the rotor effective wind speed.

The power coefficient $C_p$ is functions of the pitch angle and the rotor tip-speed ratio. The pitch angle is the angle between the blade chord line and the rotor plane of rotation, the rotor tip-speed ratio is the ratio of the rotor blade tip speed over the rotor effective wind speed. Accordingly, the wind turbine efficiency depends on the selection of a pitch angle and the rotational speed impacted by a generator power or torque that is defined by the power reference.

In the variable-speed region and constant-speed region, commonly, the pitch reference for a given wind speed is set by the pitch controller as a value that depends on the wind speed, the rotor speed or the generator power while in the variable-speed region the power reference is typically set by the power controller 15A as a function of the actual rotational speed and requirements of the grid 19 to which the generator 14 of wind turbine 10 is connected.

As can be deducted from the above equation, air density also has an influence on the power captured by the wind turbine and is itself dependent on the current climatic conditions such as atmospheric pressure and temperature. The effect of this influence can be taken into account by correcting the pitch angle reference according to the air density. The correction can be calculated for a given air density in the pitch controller 15B on the basis of the above equation. Alternatively, the correction can be stored in form of a look up table containing corrections for certain values of air densities. Correcting the pitch reference can then be done by looking up the respective correction in the look up table for a given air density. The table can be established on the basis of theoretical values, e.g. by values calculated according to the above equation, or by reference measurements. Different types of air density data sources 16 may be used for the purpose of the invention. For instance, the air density data may be predefined data based on statistics for the air density at the site of the wind turbine. Furthermore, the air density data may comprise one or more mean values of the air density at the site of the wind turbine or a plurality of typical mean values of air densities among which a specific one will be selected according to the environmental conditions of the site of the wind turbine. If a plurality of typical mean values are provided, these may be values for different altitudes above sea-level. In such a case one of the mean values will be chosen for the actual site of the wind turbine.

The air density data can also include a plurality of air density values or air density mean values for different environmental temperatures. In such a case a corresponding one of the values will be selected by the controller 15 in accordance with an environmental temperature measured by a temperature sensor 20 of the wind turbine. The wind turbine may also include sensors for measuring the air density or for measuring an atmospheric pressure. If both the environmental temperature and the atmospheric pressure are measured, the current air density can be calculated precisely leading to an optimal efficiency, however, complexity of the wind turbine increases accordingly.

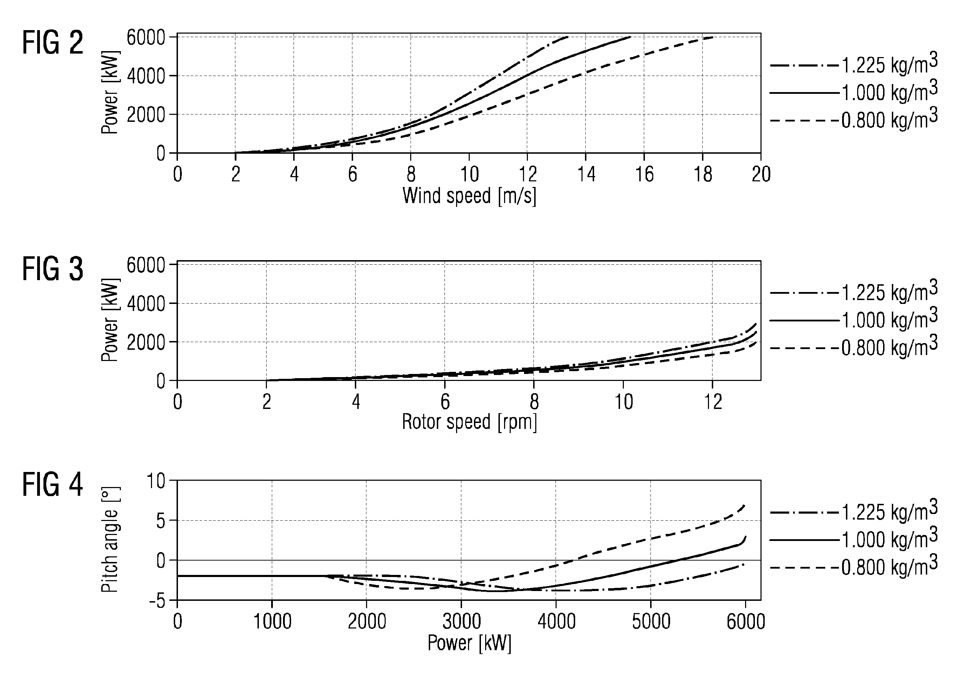

Figs. 2 to 4 illustrate the influence of air density on various parameters of a wind turbine in three sub-diagrams. Each sub-diagram shows three trajectories, one for a low air density of 0.8 kg/m$^3$, one for a medium air density of 1 kg/m$^3$ and one for a standard air density of 1.225 kg/m$^3$ (1.225 is a standard value found in IEC standards).

Fig. 2 shows the output power (in kW) of a wind turbine as a function of wind speed (in m/s). As expected, Fig. 2 shows that for a given wind speed the harvested power will increase with air density. The reason for this is that the kinetic energy of the wind linearly increases with the mass of the air passing the wind turbine in a given time unit. Accordingly the wind having a higher air density is able to perform a larger work and thus to provide more output power. In the example of Fig. 2, a maximum output power of 6,000 kW (corresponding to a nominal power value of a turbine) will be reached at a wind speeds between approximately 13.5 m/s (high air density) and 19 m/s (low air density).

Fig. 3 shows output power (in kW) of the wind turbine as a function of rotor speed (in rotations per minute, rpm). For low wind speed, i.e. in the variable-speed region, the rotor speed will commonly be controlled as a function of wind speed. Thus, higher air density does not necessarily lead to higher rotor speeds. However, the power harvested at a given rotor speed increases with air density. This can be achieved by setting the generator torque to a relatively higher value for higher air densities. Thus, Fig. 3 shows higher output powers for higher air densities at a given rotor speed. For example, for low wind speeds (in the variable-speed region) the power (torque) may be set as function of the rotational speed using a look-up table. When this look-up table is derivered a certain air density is assumed, because optimally the rotor speed should not be impacted by the air density in the variable-speed region. If a look-up table is used that will be updated according to variations in the air density the rotational speed would not be higher for higher air densities, but the power will. If, on the other hand, the look-up table is not updated the look-up table will continue to be the same for higher air densities so that the rotational speed will be higher for higher air densities, simply because there is more power to extract.

Since the rotor speed may not rise above a certain level for loads and noise reasons, the trajectories in Fig.3 do not show values for rotor speeds above 13 rpm, which may be the nominal speed of the turbine (i.e. the speed to follow in the constant-speed region). Instead, the generator torque will be controlled to keep the rotor speed at the maximum rotor speed value. The output power of the wind turbine then increases with wind speed because of an increasing generator torque applied to the wind rotor rotating at the constant maximum rotor speed.

Fig. 4 shows the optimal pitch angle (in degrees) for a given output power (in kW). The optimal pitch angle is the pitch angle at which the highest output power will be provided by the wind turbine. Or, in other words, the optimal pitch angle is the pitch angle which requires the lowest wind speed for outputting a specific output power. As can be seen in Fig. 4 the optimal pitch angle varies widely as a function of air density. At an output power of 5,000 kW the optimal pitch angle for a low air density of 0.8 kg/m$^3$ is approximately +2.5° while that for a high air density of 1.225 kg/m$^3$ is approximately -3°. Considering that the optimal pitch angle only varies between boundaries of approximately -4° and +5° for most of the operating range, it becomes apparent that the influence of air density on the optimal pitch angle is strong. The invention was made in view of and includes these findings. The diagram of Fig. 4 or similar data (e.g. a look-up table) may be used for selecting an optimal pitch angle as a function of air density.

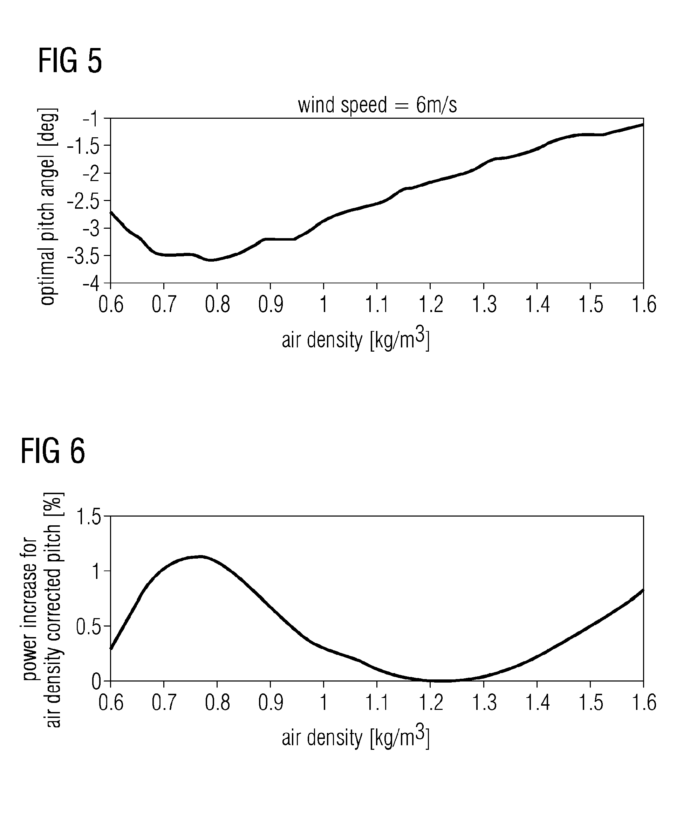

Fig. 5 shows a diagram illustrating the dependence of the optimized pitch angle on air density. The diagram shows a curve representing an optimized pitch angle (in degrees) of the rotor blades of an exemplary wind turbine for a wind speed of 6 m/s after correcting the pitch angle reference as a function of the air density (given in kilograms per cubic meter). The optimized pitch angle is that pitch angle of the rotor blades where the amount of kinetic energy extracted from the wind is the largest. As can be seen, the optimized pitch angles varies for different air densities by several degrees. The invention is based on and includes the understanding of this interrelation.

Fig. 6 shows a diagram illustrating the possible increase of power output provided by the invention as a percentage of the power output of a wind turbine the pitch angle of which was set to the optimized pitch angle (shown in Fig. 5) for an air density of about 1.225 kg/m$^3$. Assuming that the pitch angle of the wind turbine is optimized for the standard air density of 1.225 kg/m$^3$ the wind turbine efficiency is at or near optimum at air densities which only deviate slightly (up to about 5 percent) from this value. However, efficiency can be improved for lower and higher air densities yielding up to over 1% more electric output power if the pitch reference is corrected for the deviation of the air densities from the value of 1.225 kg/m$^3$. While this may appear a small increase, the overall profitability of the wind turbine is greatly enhanced by this increase. Since the invention can be implemented as a part of the wind turbine control functionality, the costs of implementation are generally very low adding to the economic and technical advantage of the invention.

Controlling or correcting the pitch angle as a function of air density not only yields a higher output power for air densities different from a standard air density, but also provides the further advantages of reducing structural loads put on the wind turbine as well as reducing noise emission which becomes an increasingly important aspect in the field of wind turbines.

The present invention was made in an effort to optimize efficiency of a wind turbine while taking variable environmental conditions into consideration. This has been described with respect to an exemplary embodiment thereof as an illustrative example of the invention. However, although a special embodiment has been described to explain the invention deviations from this embodiment are possible. For example, although the embodiment describes pitch controller that establishes the pitch reference based on the power reference, the invention can also be implemented with a pitch controller that establishes the pitch reference based on the rotor speed or with a pitch controller that establishes the pitch reference based on the wind speed. Moreover, although in the described embodiment the air density has been taken into account by calculating a pitch angle reference and then correcting the pitch angle reference since this is easy to implement in existing controllers (and allows for retrofitting) in an alternative implementation of the inventive method the air density may be already taken into account when determining the pitch angle to be set at the blades, i.e. by already taking the air density into account when calculating the pitch angle reference. Hence, the scope of the invention shall not be limited by the described exemplary embodiment but only by the appended claims.

## Claims

1.   A method of controlling the pitch angle of a wind turbine (10) including a rotor (11) having at least one rotor blade (12), wherein a pitch angle of the at least one rotor blade (12) can be variably set, the method comprising step of:

setting the pitch angle of the at least one rotor blade (12) as a function of the air density.

2.   The method as claimed in claim 1, wherein the air density is either of the following:

- measured air density
- air density derived based on measurements,
- approximated, measured air density,
- air density derived based on statistics,
or combinations thereof.

3.   The method as claimed in claim 1 or 2, wherein setting the pitch angle of the at least one rotor blade (12) as a function of the air density comprises the steps of:

- determining a pitch angle reference for the at least one rotor blade based on the generator power or torque, a rotational speed or data representing the wind speed;
- determining a pitch angle correction as a function of the air density; and
- correcting the determined pitch angle reference by the determined pitch angle correction.

4.   The method as claimed in any of the claims 1 to 3, wherein setting the pitch angle or correcting the pitch angle reference of the at least one rotor blade (12) as a function of the air density includes selecting the pitch angle or the pitch angle correction from a set of predefined pitch angles or pitch angle corrections in accordance with the air density.

5. The method as claimed in any of the claims 1 to 3, wherein the pitch angle or the pitch angle correction is calculated as a function of the air density according to a given equation.

6. The method as claimed in any of the preceding claims, wherein the air density at the site of the wind turbine is determined.

7. The method as claimed in claim 6, wherein determining the air density includes determining a mean air density.

8. The method as claimed in claim 6 or claim 7, wherein an altitude above sea-level of the wind turbine (10) is taken into account when determining the air density.

9. The method as claimed in any of the claims 6 to 8, wherein determining the air density includes determining or measuring an atmospheric pressure and/or an environmental temperature and/or an environmental humidity.

10. The method as claimed in any of the preceding claims, further comprising measuring or determining a current operational parameter of the wind turbine (10) and setting a torque of the electric generator (14) or a power of the electric generator (14) as a function of the measured or determined current operational parameter of the wind turbine (10).

11. The method as claimed in claim 10, wherein the current operational parameter of the wind turbine (10) is a current wind speed or a current rotational speed or a current rotor tip-speed ratio.

12. The method as claimed in claim 10 or claim 11, wherein setting the torque or the power of the electric generator (14) is independent of the determined air density.

13. A wind turbine (10) including a rotor (11) having at least one rotor blade (12) with a pitch actuator system (17), wherein a pitch angle of the at least one rotor blade (12) can be variably set by the pitch actuator system (17), the wind turbine (10) further comprising a controller (15) connected to the pitch actuator system (17) and adapted to carry out the method of one of the preceding claims.

14. A software program product comprising computer program code stored on a computer readable storage medium which, when executed on a controller (15) of a wind turbine (10), instructs the wind turbine (10) to carry out the method as claimed in any of the claims 1 through 12.

FIG 1

FIG 2

FIG 3

FIG 4

EP 2 584 193 A1

FIG 5

wind speed = 6m/s

FIG 6

Europäisches
Patentamt

European
Patent Office

Office européen
des brevets

# EUROPEAN SEARCH REPORT

Application Number

EP 11 18 5982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 666 723 A1 (MITSUBISHI HEAVY IND LTD [JP]) 7 June 2006 (2006-06-07) * abstract * * figures 1,7,10 * * paragraphs [0002] - [0004], [0007] - [0011], [0034], [0038] - [0042], [0044] - [0048], [0063] * | 1-14 | INV. F03D7/02 |
| X | EP 2 295 793 A2 (GEN ELECTRIC [US]) 16 March 2011 (2011-03-16) * figure 4 * * paragraphs [0001] - [0008], [0015], [0016], [0021], [0022], [0026] - [0028], [0031] - [0038], [0045] * | 1,2,7-14 | |
| X | US 2007/183885 A1 (ORMEL FRANK THEODOOR [NL] ET AL) 9 August 2007 (2007-08-09) * figures 2,4,5 * * paragraphs [0002], [0004], [0007], [0022], [0026], [0028], [0029], [0033] * | 1-3,7, 10-14 | |

TECHNICAL FIELDS
SEARCHED (IPC)

F03D

The present search report has been drawn up for all claims

| Place of search | Date of completion of the search | Examiner |
|---|---|---|
| The Hague | 6 March 2012 | Rakotonanahary, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 11 18 5982

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2012

| Patent document cited in search report | | Publication date | Patent family member(s) | | Publication date |
|---|---|---|---|---|---|
| EP 1666723 | A1 | 07-06-2006 | AU | 2004272877 A1 | 24-03-2005 |
|  |  |  | AU | 2010200559 A1 | 04-03-2010 |
|  |  |  | CA | 2535367 A1 | 24-03-2005 |
|  |  |  | EP | 1666723 A1 | 07-06-2006 |
|  |  |  | KR | 20060035726 A | 26-04-2006 |
|  |  |  | US | 2007041837 A1 | 22-02-2007 |
|  |  |  | WO | 2005026537 A1 | 24-03-2005 |
| EP 2295793 | A2 | 16-03-2011 | CN | 102022265 A | 20-04-2011 |
|  |  |  | EP | 2295793 A2 | 16-03-2011 |
|  |  |  | US | 2011064573 A1 | 17-03-2011 |
| US 2007183885 | A1 | 09-08-2007 | CN | 101235799 A | 06-08-2008 |
|  |  |  | EP | 1959130 A2 | 20-08-2008 |
|  |  |  | US | 2007183885 A1 | 09-08-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023105 B2